# EUROPEAN PATENT APPLICATION

(11) **EP 4 525 442 A1**
(43) Date of publication of application: **19.03.2025**
(21) Application number: 23899971.8
(22) Date of filing: 05.12.2023
(51) Int. Cl.: H04N 19/146

(54) **VIDEO CODING METHOD AND APPARATUS, AND ELECTRONIC DEVICE AND STORAGE MEDIUM**

(30) Priority: 07.12.2022 CN 202211567316
(71) Applicant: Beijing Zitiao Network Technology Co., Ltd., Beijing 100190 (CN)
(72) Inventor: MEI, Yuangang, Beijing 100028 (CN); HAN, Chaoyi, Beijing 100028 (CN)
(74) Representative: Grünecker Patent- und Rechtsanwälte PartG mbB
(86) International application number: PCT/CN2023/136507
(87) International publication number: WO 2024/120396

(57) **Abstract**

Embodiments of the present disclosure provides a method, apparatus, electronic device, and storage medium for video encoding, including: extracting a video encoding feature of initial video data based on a hardware video editor, the video encoding feature representing video content complexity of the initial video data; processing, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and encoding the initial video data at the target quality level with the hardware video editor to generate a target video. The bit rate of the generated target video is compatible to the video content, avoiding the problem that the bit rate is too high or too low, improving the video quality, and avoiding the bit rate waste.

## Description

This application claims the benefit of Chinese Patent Application No. 202211567316. X, entitled 'METHOD, APPARATUS, ELECTRONIC DEVICE, AND STORAGE MEDIUM FOR VIDEO ENCODING,' filed on December 07, 2022, the entire content of which is incorporated herein by reference.

### FIELD

Embodiments of the present disclosure relate to the field of image processing technologies, and in particular, to a method, apparatus, electronic device, and storage medium for video encoding.

### BACKGROUND

A graphics processing unit (GPU) is a processor responsible for performing image processing tasks in terminal devices such as cell phones and personal computers. The graphics processor has powerful digital computing and parallel processing capabilities. In application scenarios such as video coding, the use of a graphics processor may effectively improve the quality and efficiency of image coding.

In some graphics processors, a hardware-based video encoder, also referred to as a hardware video editor, such as a Nvenc unit, is capable of encoding data in YUV/RGB format into video compliant with the H.264/HEVC standard for efficient video encoding.

In practice, when invoking a hardware video editor for video encoding, it is necessary to set a parameter representing a quality level; however, in the prior art, the encoding is usually performed based on experience using a fixed set quality level, resulting in an unreasonable bit rate of the encoded video.

### SUMMARY

Embodiments of the present disclosure provides a method, apparatus, electronic device, and storage medium for video encoding to overcome the problem of an unreasonable bit rate of an encoded video caused by encoding using a fixed set quality level.

According to a first aspect, an embodiment of the present disclosure provides a method of video encoding, including:
extracting a video encoding feature of initial video data based on a hardware video editor, the video encoding feature representing video content complexity of the initial video data; processing, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and encoding the initial video data at the target quality level with the hardware video editor to generate a target video.

According to a second aspect, an embodiment of the present disclosure provides an apparatus for video encoding, including:
a parameter obtaining module configured to extract a video encoding feature of initial video data based on a hardware video editor, the video encoding feature representing video content complexity of the initial video data;
a parameter optimizing module configured to, process, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and
an encoding module configured to encode the initial video data at the target quality level with the hardware video editor to generate a target video.

According to a third aspect, an embodiment of the present disclosure provides an electronic device, including:
a processor, and a memory communicatively connected to the processor;
the memory storing computer executable instructions; and
the processor executing the computer executable instructions stored in the memory to implement the method of video encoding of the first aspect and various possible designs of the first aspect.

According to a fourth aspect, an embodiment of the present disclosure provides a computer-readable storage medium having computer-executable instructions stored thereon, the computer-executable instructions, when executed by a processor, implementing the method of video encoding of the first aspect and the possible designs of the first aspect is implemented.

According to a fifth aspect, an embodiment of the present disclosure provides a computer program product including a computer program, the computer program, when executed by a processor, implementing the method of video encoding of the first aspect and various possible designs of the first aspect.

The present disclosure provides a method, apparatus, electronic device, and storage medium for video encoding, including: extracting a video encoding feature of initial video data based on a hardware video editor, the video encoding feature representing video content complexity of the initial video data; processing, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and encoding the initial video data at the target quality level with the hardware video editor to generate a target video. By utilizing the feature that the hardware video editor may conveniently output the encoding parameters, the video encoding features corresponding to the initial video data are obtained, after which a target image quality level matching with the video encoding features is obtained by the pre-trained predictive neural network model. The hardware video editor is then utilized to perform video encoding with the target quality level, so as to make the bit rate of the generated target video compatible with the video content, avoiding the problem of the bit rate being too high or too low. Thus, the video image quality may be improved, and bit rate waste may be avoided.

### BRIEF DESCRIPTION OF DRAWINGS

In order to more clearly illustrate the embodiments of the present disclosure or the technical solutions in the prior art, the accompanying drawings used in the description of the embodiments, or the prior art will be briefly introduced below. It will be apparent that the drawings in the following description are some embodiments of the present disclosure, and those skilled in the art may also obtain other drawings according to these drawings without creative labor.
FIG. 1 is a schematic diagram of an application scenario according to an embodiment of the present disclosure;
FIG. 2 is a schematic flowchart 1 of a method of video encoding according to an embodiment of the present disclosure;
FIG. 3 is a flowchart of a specific implementation process of step S101 in the embodiment shown in FIG. 2;
FIG. 4 is a flowchart of a specific implementation process of step S1013 in the embodiment shown in FIG. 3;
FIG. 5 is a schematic diagram of a process of generating a video encoding feature according to an embodiment of the present disclosure;
FIG. 6 is a schematic diagram of a data structure of a video encoding feature according to an embodiment of the present disclosure;
FIG. 7 is a schematic flowchart 2 of a method of video encoding according to an embodiment of the present disclosure;
FIG. 8 is a schematic diagram of a process of generating an evaluation value corresponding to a current quality level of a current frame according to an embodiment of the present disclosure;
FIG. 9 is a schematic flowchart of a step of training a predictive neural network model;
FIG. 10 is a structural block diagram of an apparatus for video encoding according to an embodiment of the present disclosure;
FIG. 11 is a schematic structural diagram of an electronic device according to an embodiment of the present disclosure;
FIG. 12 is a schematic diagram of a hardware structure of an electronic device according to an embodiment of the present disclosure.

### DETAILED DESCRIPTION

In order to make the purpose, technical solutions and advantages of the embodiments of the present disclosure clearer, the technical solutions in the embodiments of the present disclosure will be described clearly and completely in the following in connection with the accompanying drawings in the embodiments of the present disclosure. It is clear that the described embodiments are a part of the embodiments of the present disclosure, and not all of the embodiments. Based on the embodiments in the present disclosure, all other embodiments obtained by a person of ordinary skill in the art without creative labor fall within the scope of protection of the present disclosure.

The following describes an application scenario of an embodiment of the present disclosure.

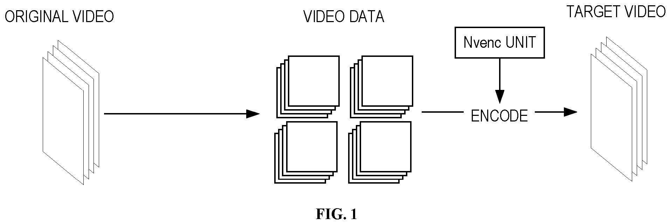

The method of video encoding provided by the embodiment of the present disclosure may be applied to various application scenes needing video encoding, such as video editing, preview and playing. More specifically, for example, it is applied to a video editing software, a video editing cloud platform, and a live streaming software. By way of example, the method provided by the embodiments of the present disclosure may be applied to a terminal device, such as a smartphone, a tablet computer, a personal computer, and the like; it may also be applied to a cloud server. FIG. 1 is a schematic diagram of an application scenario provided by an embodiment of the present disclosure. Taking an application scenario in which video editing software is run on the terminal device as an example, as shown in FIG. 1. Specifically, the terminal device generates video data by running the video editing software, after performing video editing on the original video, for example, by adding video effects, adding an audio track, subtitles, etc.. The video data may include a plurality of video frames and editing information corresponding to respective frames, after which the terminal device encodes the video data by invoking a hardware video editor in the graphics processor, generating a target video (finished video) with editing effects for playback, and completing the workflow of video editing, wherein the hardware video editor is, for example, a Nvenc unit.

**In** the prior art, when a hardware video editor is invoked to process video data, corresponding parameters need to be set to control a specific encoding manner. Among them, Variable Bit Rate (VBR) encoding, also known as variable bit rate encoding and non-fixed bit rate encoding, is a commonly used encoding manner, which may dynamically adjust the bit rate based on the video content. Thus, the bit rate of the coded video may be varied in accordance with the complexity of the image, and therefore its encoding efficiency is relatively high, allowing the volume of the video under the static picture to be compressed, the mosaic in the variable motion picture to be less, balancing the volume and quality of the video. In particular, Constant Quality (CQ) Variable Bit Rate (CQ-VBR) is an encoding method based on variable bit rate, which utilizes the quality level to control the image quality (bit rate) in the variable bit rate encoding process, so as to achieve a more fine-grained control of the volume and quality of the video generated after the encoding, and to further improve the flexibility and practicality of the video encoding control.

However, in the process of practical application, when the hardware video editor is invoked to encode using a constant quality variable bit rate (CQ-VBR) mode, the setting of the quality level (cq value), which is usually determined based on the user experience, leads to the problem that the quality level is often set irrationally, which results in the video having a bit rate that is too high (resulting in an excessively large video volume, which wastes storage and network resources) or a bit rate that is too low (low video image quality, affecting the video viewing experience).

Embodiments of the present disclosure provide a method of video encoding, which solves the above problem by automatically generating a reasonable target quality level (cq value) and performing video encoding based on the target quality level.

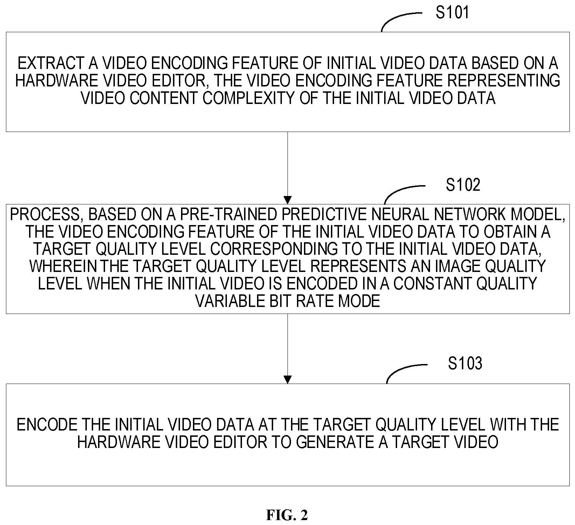

Referring to FIG. 2, FIG. 2 is a schematic flowchart 1 of a method of video encoding according to an embodiment of the present disclosure. The method in this embodiment may be applied to an electronic device provided with a hardware video editor, for example, a terminal device and a server. In this embodiment, which is presented with the terminal device as the execution subject, by way of example, the method of video encoding includes:
At Step S101, a video encoding feature of initial video data is extracted based on a hardware video editor, the video encoding feature representing video content complexity of the initial video data.

For example, after step S101, the terminal device first obtains the initial video data. The initial video data may be data generated in a manner such as a video editing application or a live streaming application, for example, video data including a YUV/RGB format, a video effect, an audio track, a subtitle, and other data. The initial video data is data to be encoded, and after the initial video data is encoded, a corresponding playable video may be generated.

Afterwards, the initial video data is processed by invoking the hardware video editor. Specifically, for example, with the initial video data as an input parameter, an application interface of the hardware video editor is invoked, which in turn runs a corresponding processing function to process the initial video data to obtain a video encoding feature corresponding to the initial video data. In which the video encoding feature represents the video content complexity of the initial video data by a video parameter of the initial video data, and an encoding parameter corresponding to the video parameter. Specifically, in one possible implementation, the video encoding feature is processed and obtained based on the video parameter and the encoding parameter. Therein, the video parameter is information representing the initial video data, including, for example, video height, width (i.e., resolution), frame rate (fps), etc.; the encoding parameter is a parameter representing the parameter used by the hardware video editor to encode the initial video data, such as the frame encoding size, the type of each frame corresponding to the video data (including I-frame, P-frame, and B-frame), the image distortion degree, the image fineness, and so on.

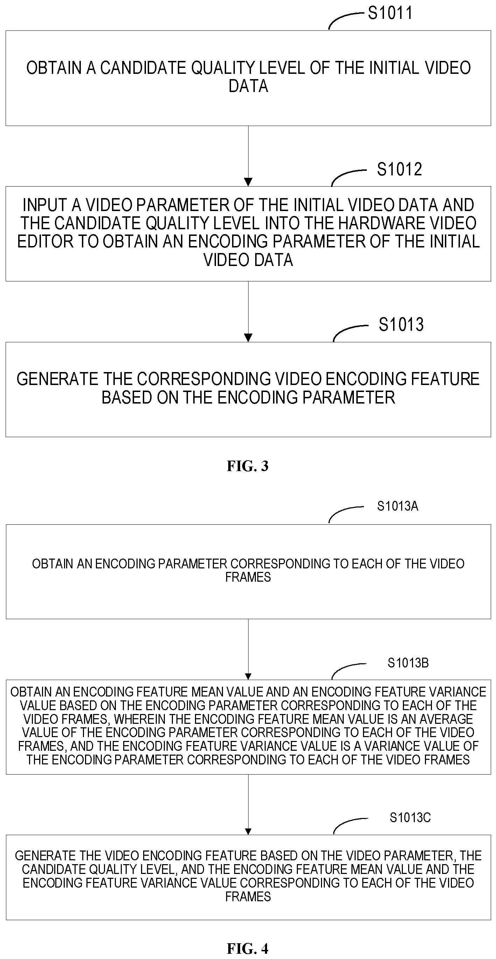

Further, the video parameter corresponding to the video encoding feature is obtained directly based on the video information of the initial video data, and details are not described herein again. The video parameter corresponding to the video encoding feature is obtained by using the video parameter as an input and invoking an interface provided by the hardware video editor for generating the encoding parameter, and therefore, the encoding parameter has some correspondence with the initial video data. In a possible implementation, as shown in FIG. 3, the specific implementation step of Step S101 includes:
At Step S1011, a candidate quality level of the initial video data is obtained.
   For example, based on the foregoing description for the application scenario and the prior art, when the constant quality variable bit rate mode is used for encoding with the hardware video editor, a quality level needs to be set. The candidate quality level may be a predetermined default value, and more specifically, the candidate quality level may be a value in a range of [18, 35], for example, 25. The smaller the quality level, the higher the quality level of the video generated after encoding and the clearer the video, and the larger the video volume is.
At Step S1012, a video parameter of the initial video data and the candidate quality level are inputted into the hardware video editor to obtain an encoding parameter of the initial video data.

Further, by invoking an interface provided by the hardware video editor, a video parameter of the initial video data and a candidate quality level are input into the hardware video editor as input quantities, and an encoding parameter outputted by the hardware video editor is obtained, for example, a frame encoding size (SIZE), a type of each frame corresponding to the video data (including an I-frame, a P-frame, and a B-frame), an image distortion, and an image fineness, and the like. Among them, for example, the image distortion degree may be expressed by a Sum of Absolute Transformed Difference (SATD) of each frame, and the image refinement degree may be expressed by a Quantizer Parameter (QP) of each frame. The specific calculation process of absolute transformed difference and quantizer parameter is existing technology, which may be realized by the function provided by the driver of the hardware video editor and will not be repeated here.

At Step S1013, the corresponding video encoding feature is generated based on the encoding parameter.

For example, the encoding parameter obtained by inputting the video parameter and the candidate quality level into the hardware video editor is equivalent to a precoding of the initial video data by the hardware video editor, that is, the hardware video editor predicts a corresponding encoding parameter based on the initial video data, but does not actually encode the initial video data. Then, based on the encoding parameter, the video encoding feature is generated by combining the video parameter and the candidate quality level. The video encoding feature may express the complexity of the video content of the initial video data. Subsequently, based on this video encoding feature, a matching quality level may be determined for encoding, so as to realize the purpose of combining the image quality and the complexity of the video content toward matching, and avoid the problem of wasted or too low bit rate.

Further, in a possible implementation, the initial video data includes a plurality of video frames. As shown in FIG. 4, the specific steps for implementing Step S1013 include:
At Step S1013A, an encoding parameter corresponding to each of the video frames is obtained.
At Step S1013B, an encoding feature mean value and an encoding feature variance value are obtained based on the encoding parameter corresponding to each of the video frames, wherein the encoding feature mean value is an average value of the encoding parameter corresponding to each of the video frames, and the encoding feature variance value is a variance value of the encoding parameter corresponding to each of the video frames.
At Step S1013C, the video encoding feature is generated based on the video parameter, the candidate quality level, and the encoding feature mean value and the encoding feature variance value corresponding to each of the video frames.

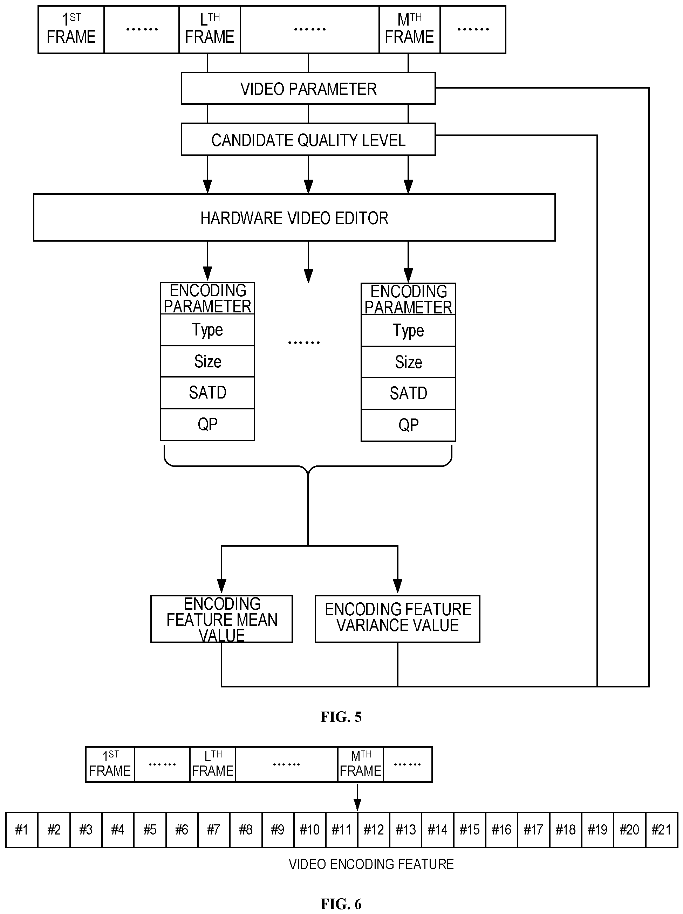

By way of example, the initial video data includes a plurality of video frames, and the frame encoding feature corresponding to the video frame is obtained by separately obtaining the video parameter and the encoding parameter corresponding to the video frame in the initial video data. The video content complexity of the initial video data is then judged based on the average level and variation between the plurality of frame encoding features, and the video encoding feature of the initial video data is then obtained. FIG. 5 is a schematic diagram of a process for generating a video encoding feature provided by an embodiment of the present disclosure, and the above process is described below in conjunction with FIG. 5. As shown in FIG. 5, the initial video data includes N video frames, and N is an integer number greater than one. In which, taking the Mth frame as an example (M is an integer smaller than N and larger than 1). The video parameter of the Mth frame is first obtained, such as the height, width, and frame rate of the Mth frame, and this video parameter and the candidate encoding level are inputted into the interface of the hardware video editor, and the hardware video editor is utilized to obtain the encoding parameter of the Mth frame, for example, the type of the Mth frame (Type is shown in the figure), the frame encoding size (shown in the figure as Size), sum of absolute transformed difference (shown as SATD in the figure), and quantizer parameter (shown as QP in the figure). Afterwards, the mean and variance of the encoding parameter corresponding to the Mth frame are calculated to obtain an encoding feature mean value and an encoding feature variance value. In which, specifically, the mean and variance of the encoding parameter corresponding to the Mth frame are the mean and variance of the encoding parameter of each of the video frames in the set constituted by at least one adjacent video frame preceding the Mth frame (illustrated as the Lth frame in the figure, where L is an integer smaller than M and greater than or equal to 1) and the Mth frame. Among them, for the specific implementation of the encoding parameters, the corresponding mean and variance are calculated, and the specific calculation process for obtaining the encoding feature mean value and encoding feature variance value is not repeated. Afterwards, combining the video parameter, the candidate quality level, the encoding feature mean value and the encoding feature variance value, the video encoding feature corresponding to the Mth frame is obtained. The video encoding feature indicates the video content complexity of the video segment corresponding to the Lth frame to the Mth frame in the initial video data. A possible L=1. The video encoding feature indicates the video content complexity of the video segment preceding the Mth frame in the initial video data.

Further, FIG. 6 is a schematic diagram of a data structure of a video encoding feature according to an embodiment of the present disclosure. Referring to FIG. 5 as well as FIG. 6, for example, the video encoding feature includes a total of 21 data fields, shown as fields #1 through #21 in the figure. Among them:
#1 field indicates the image height of the 1st frame to the Mth frame in the initial video data;
#2 field indicates the image width of the 1st frame to the Mth frame in the initial video data;
#3 field indicates the frame rate of the 1st frame to the Mth frame in the initial video data;
#4 field indicates a candidate quality level of the 1st frame to the Mth frame in the initial video data;
#5 field indicates the number of I frames in the 1st frame to the Mth frame in the initial video data;
**#6** field indicates the number of P frames in the 1st frame to the Mth frame in the initial video data;
#7 field indicates the number of B frames in the 1st frame to the Mth frame in the initial video data;
#8 field indicates an average size of the I frames in the 1st frame to the Mth frame in the initial video data;
#9 field indicates an average size of the P frames in the 1st frame to the Mth frame in the initial video data;
#10 field indicates the average size of the B frames in the 1st frame to the Mth frame in the initial video data;
#11 field indicates an average Sum of Absolute Transformed Difference of the I frames in the 1st frame to the Mth frame in the initial video data;
#12 field indicates an average Sum of Absolute Transformed Difference of the P frames in the 1st frame to the Mth frame in the initial video data;
#13 field indicates an average Sum of Absolute Transformed Difference of the B frames in the 1st frame to the Mth frame in the initial video data;
#14 field indicates an average Quantizer Parameter of the 1st frame to the Mth frame in the initial video data;
#15 field indicates a dimensional variance of the I frames in the 1st frame to the Mth frame in the initial video data;
#16 field indicates a dimensional variance of the P frames in the 1st frame to the Mth frame in the initial video data;
#17 field indicates a dimensional variance of the B frames in the 1st frame to the Mth frame in the initial video data;
#18 field indicates a mean Absolute Transformed Difference and a variance of the I frames of the 1st frame to the Mth frame in the initial video data;
#19 field indicates the mean Absolute Transformed Difference and the variance of the P frames of the 1st frame to the Mth frame in the initial video data;
#20 field indicates the mean Absolute Transformed Difference and the variance of the B frames of the 1st frame to the Mth frame in the initial video data;
#21 field indicates the Quantizer Parameter variance of the 1st frame to the Mth frame in the initial video data;

At Step S102, based on a pre-trained predictive neural network model, the video encoding feature of the initial video data is processed to obtain a target quality level corresponding to the initial video data, wherein the target quality level represents an image quality level when the initial video is encoded in a constant quality variable bit rate mode.

By way of example, after obtaining a video encoding feature of the initial video data, a matching target quality level needs to be determined for the video encoding feature of the initial video data. Specifically, the quality level, i.e., the cq value, represents the image quality level when encoding the initial video in the constant quality variable bit rate (CQ-VBR) mode, and is one of the parameters that need to be used when invoking the hardware video editor. In this embodiment step, the video encoding feature of the initial video data is processed by a pre-trained predictive neural network model to predict a quality level, i.e., a target quality level, that matches the complexity of the video content it represents.

At Step S103, the initial video data is encoded at the target quality level with the hardware video editor to generate a target video.

By way of example, further, after obtaining the target quality level, the hardware video editor is invoked to process the initial video data with the target quality level as a parameter, and a corresponding finished video for playback, i.e., the target video, may be generated.

**In** one possible implementation, the target quality level may be a level sequence including a plurality of level identifications representing specific quality levels (i.e., cq values). Herein, respective level identification in the level sequence corresponds to one or more video frames in the initial video data; in a more specific possible implementation, respective level identification corresponds to one video frame. When the hardware video editor is utilized to encode the initial video data with a target quality level, each video frame in the initial video data is obtained sequentially (in parallel or serially). Based on the level identification corresponding to each video frame, the hardware video editor is invoked to encode the corresponding video frame with a constant quality variable bit rate, so that each video frame after encoding has a different image quality level, thereby implementing more accurate encoding and improving the encoding efficiency. Therein, the specific implementation process of invoking the hardware video editor to encode the corresponding video frame at a constant quality variable bit rate is prior art and will not be repeated herein.

In this embodiment, a video encoding feature of initial video data is extracted based on a hardware video editor, the video encoding feature representing video content complexity of the initial video data; based on a pre-trained predictive neural network model, the video encoding feature of the initial video data is processed to obtain a target quality level corresponding to the initial video data, wherein the target quality level represents an image quality level when the initial video is encoded in a constant quality variable bit rate mode; and the initial video data is encoded at the target quality level with the hardware video editor to generate a target video. B The video encoding features corresponding to the initial video data are obtained by utilizing the property that the hardware video editor may easily output the encoding parameters. Afterwards, a target image quality level matching the video encoding features is obtained by a pre-trained predictive neural network model, and then the hardware video editor is utilized to encode the video with the target quality level, so that the bit rate of the generated target video is compatible with the video content. The problem of too high or too low bit rate is avoided, the video image quality is improved, and the waste of bit rate is avoided.

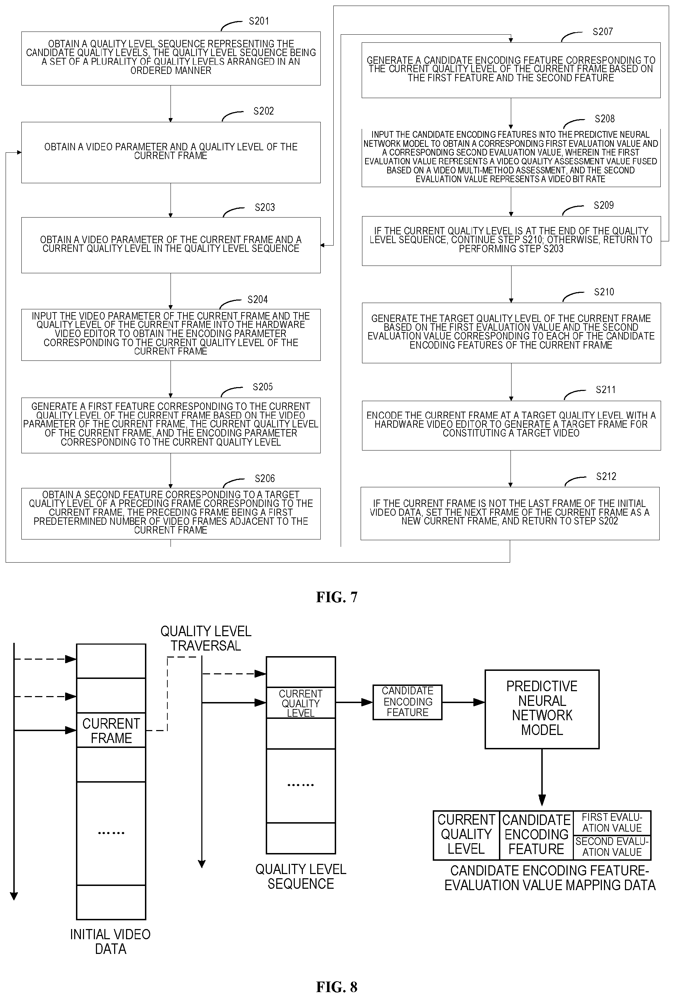

Referring to FIG. 7, FIG. 7 is a schematic flowchart 2 of a method of video encoding according to an embodiment of the present disclosure. The present embodiment further refines the implementation process of Steps S101 and S102 on the basis of the embodiment shown in FIG. 2. The method of video encoding includes:
At Step S201, a quality level sequence representing the candidate quality levels is obtained, the quality level sequence being a set of a plurality of quality levels arranged in an ordered manner.
   By way of example, with reference to the introduction of the candidate quality level in the embodiment shown in FIG. 2, in the present embodiment, the candidate quality level may include a plurality of quality levels. The plurality of candidate quality levels are represented by a predetermined quality level sequence, i.e., the quality level sequence is an implementation of the candidate quality level. Specifically, for example, the quality level sequence is eq_data=[15:40], i.e., an ordered arrangement of a plurality of quality levels including quality level 15 to quality level 40, and the plurality of quality levels of the above ordered arrangement of levels 15 to quality level 40, i.e., a candidate quality level. It may be appreciated that there are various ways of implementing the quality level sequence, which may be a data structure in an enumeration manner such as an array, a matrix, a key-value pair, a structure, etc., or a set of numbers expressed by way of a function, which will not be discussed here by way of example.
At Step S202, a video parameter and a quality level of the current frame are obtained.
At Step S203, a video parameter of the current frame and a current quality level in the quality level sequence are obtained;
At Step S204, the video parameter of the current frame and the quality level of the current frame are input into the hardware video editor to obtain the encoding parameter corresponding to the current quality level of the current frame.

For example, starting from Step S202 and Step S203, respectively, the matching target quality level corresponding to each video frame in the initial video parameters is obtained by cycling in two dimensions (video frame dimension, quality level dimension), so as to encode each frame based on the target quality level corresponding to each video frame, thereby implementing sub-frame variable encoding in the video and improving the encoding efficiency and encoding quality.

Specifically, starting from a first frame in the initial video data, sequentially as a current frame until the last frame of the initial video data, for each current frame, the video parameters may be directly obtained without further discussion. Afterwards, based on the plurality of quality levels and video parameters in the candidate quality data, which are sequentially inputted into the hardware video editor, the encoding parameter corresponding to the current quality level of the current frame may be obtained. Among them, the encoding parameters of the first frame of the initial video data may be obtained by invoking the corresponding interface of the hardware video editor based on the predetermined default quality level in combination with the video parameter. The specific implementation has been described in the above embodiment and will not be repeated herein.

At Step S205, a first feature corresponding to the current quality level of the current frame is generated based on the video parameter of the current frame, the current quality level of the current frame, and the encoding parameter corresponding to the current quality level;
Further, after obtaining the video parameter of the current frame, the current quality level of the current frame, and the encoding parameter corresponding to the current quality level, the above video parameter, the current quality level, and the encoding parameter are combined to generate a frame encoding feature corresponding to the current quality level, i.e., a first feature, i.e., the first feature includes the video parameter, the current quality level, and the encoding parameter. Specifically, for example, the video parameters include an image height, a width, a resolution, and a frame rate; the encoding parameters include a frame encoding size, a type of each frame corresponding to the video data (including an I frame, a P frame, and a B frame), an image distortion degree, and an image refinement degree. The first feature is obtained by combining the video parameter of the current frame, the current quality level of the current frame, and the encoding parameter corresponding to the current quality level of the current frame:
F={h, w, fps, cq, type, size, satd, gp}.

Herein, F represents the first feature of the current frame, h represents an image height, w represents an image width, fps represents an image frame rate, and h, w, fps are video parameters. Cq represents the current quality level, type represents the type of the current frame, size represents the size of the current frame, satd represents the sum of absolute transformed difference of the current frame, and gp represents the quantizer parameter of the current frame. The above type, size, satd and gp are encoding parameters.

At Step S206, a second feature corresponding to a target quality level of a preceding frame corresponding to the current frame is obtained, the preceding frame being a first predetermined number of video frames adjacent to the current frame.

At Step S207, a candidate encoding feature corresponding to the current quality level of the current frame is generated based on the first feature and the second feature.

Further, after obtaining the first feature corresponding to the current frame, a second feature generated by the preceding frame corresponding to the current frame based on the target quality level is obtained. The second feature, similar to the first feature, is data used to represent frame encoding features of the preceding frame. Specifically, the preceding frame corresponding to the current frame, that is, the first predetermined number of video frames adjacent to the current frame. For example, 30 video frames before the current frame, and the specific implementation of the preceding frame, refer to the embodiment corresponding to FIG. 5, that is, the set of video frames directly from the Lth frame to the Mth frame, which is the preceding frame. More specifically, when the current frame is the second frame of the initial video data, the preceding frame of the current frame is the first frame of the initial video data, and the second feature corresponding to the first frame, i.e., the frame encoding feature generated based on the default quality level, the specific process of which is not further described. Afterwards, based on the frame encoding features corresponding to the plurality of video frames (the first frame and the second frame of the initial video data) constituted by the second feature of the first frame and the first feature of the second frame, the average and variance values of the encoding parameters in the frame encoding features corresponding to the current frame are calculated, and the video candidate encoding features corresponding to the second frame are obtained, i.e., the candidate encoding features corresponding to the current quality level of the current frame. The specific implementation process may be found in the detailed description of the process of obtaining the video encoding features in the embodiment shown in FIG. 5 and will not be repeated here. When the current frame is the third and subsequent video frames of the initial video data, since the respective video frames in the initial video data are sequentially processed as the current frame, the target quality level (i.e., the optimized quality level) corresponding to the preceding frame (e.g., the second frame) has already been obtained when processing to the third frame. At this point, the frame encoding feature corresponding to the preceding frame of the current frame, i.e., the second feature, is generated based on the target quality level corresponding to this preceding frame.

In this embodiment, by obtaining the second feature corresponding to the target quality level of the preceding frame corresponding to the current frame, a candidate encoding feature corresponding to the current quality level representing the video content complexity is generated based on the second feature and the first feature. Since the second feature of the preceding frame is generated based on the optimized target quality level, the candidate encoding feature generated by the second feature may more accurately represent the video content complexity, thereby improving the accuracy of the candidate encoding features, ultimately improving the accuracy of the target quality grade obtained based on the candidate encoding features and improving the efficiency of video encoding.

At Step S208, the candidate encoding features are input into the predictive neural network model to obtain a corresponding first evaluation value and a corresponding second evaluation value, wherein the first evaluation value represents a video quality assessment value fused based on a video multi-method assessment, and the second evaluation value represents a video bit rate.

At Step S209, if the current quality level is at the end of the quality level sequence, Step S210 is continued; otherwise, return to performing Step S203.

Further, for each current frame in the cycling process, as the current quality level changes cyclically, the corresponding generated first feature also changes, and consequently, the generated candidate encoding features corresponding to the current quality level also change. In each cyclic round corresponding to the current quality level, the candidate encoding features obtained in step S207 are input into the predictive neural network model, and the first evaluation value and the second evaluation value outputted by the predictive neural network model may be obtained. Wherein, the first evaluation value represents the video quality assessment value based on the video multi-method assessment fusion, and the second evaluation value represents the video bit rate.

In this specification, Video Multi-method Assessment Fusion (VMAF) is a video quality evaluation metric used to measure the perception of streaming video quality in large-scale environments, which may solve the problem that traditional metrics cannot reflect the video situation of a variety of scenarios and features. The specific implementation of the video multi-method assessment fusion is prior art, and the video bit rate may be obtained from the Quantizer Parameter in the encoding parameter, which will not be discussed here. By means of a pre-trained predictive neural network model, the input video encoding features ( candidate encoding features) may be mapped to corresponding video multi-method assessment fusion metrics and video bit rates. FIG. 8 is a schematic diagram of a process for generating an evaluation value corresponding to the current quality level of a current frame provided by an embodiment of the present disclosure. As shown in FIG. 8, in respect of the initial video data, a video frame traversal is first performed. Then, for each video frame, a quality level traversal is performed, and when the traversal reaches the current frame, the current quality level is obtained. Afterwards, based on the steps of the above embodiment, a candidate encoding feature corresponding to the current quality level is obtained, and the candidate encoding feature is input into a predictive neural network model, which outputs a first evaluation value and a second evaluation value. Afterwards, the first evaluation value and the second evaluation value, with the corresponding candidate encoding feature (and/or the current quality level), are saved as a set of candidate encoding feature-evaluation value mapping data. Afterwards, if the current quality level is at the end of the quality level sequence, it means that the quality levels in the quality level sequence corresponding to the current frame have all been traversed. Then Step S210 is performed, and the target quality level is selected from the plurality of candidate quality levels. If the current quality level is not at the end of the quality level sequence, the process is returned to Step S203, and the cycle is continued to the next set of quality levels (updating the current quality level), and the above process is repeated. Until all the quality levels in the quality level sequence are traversed.

At Step S210, the target quality level of the current frame is generated based on the first evaluation value and the second evaluation value corresponding to each of the candidate encoding features of the current frame.

Since the candidate encoding features are generated based on the quality level, each of the candidate encoding features corresponds to one quality level. After obtaining the first evaluation value and the second evaluation value corresponding to each quality level in the quality level sequence of the current frame, based on the first evaluation value and the second evaluation value corresponding to each quality level in the quality level sequence of the current frame, each quality level in the quality level sequence is evaluated, and an optimal quality level, i.e., a target quality level, is obtained.

By way of example, the specific implementation step of Step S210 includes:
At Step S2101, first target encoding features are obtained based on the first evaluation value corresponding to each of the candidate encoding features, the first target encoding features being candidate encoding features for which the first evaluation value is greater than a first threshold.
At Step S2102, a second target encoding feature is determined based on the second evaluation values of the first target encoding features, the second target feature being a video encoding feature with the minimum second evaluation value in the first target encoding features.
At Step S2103, the target quality level is obtained based on a quality level corresponding to the second target feature.

For example, the first evaluation value and the second evaluation value respectively represent the video quality and the bit rate after the video is encoded. Herein, the higher the first evaluation value is, the higher the video quality of the video is, and the higher the second evaluation value is, the higher the bit rate is, i.e., the larger the video volume is. In order to improve the video encoding efficiency, a quality level needs to be selected, and the bit rate may be greatly reduced on the premise of meeting the requirement of the video quality of the predetermined video.

In order to solve the above problem, in the present embodiment, firstly, based on the first evaluation value corresponding to each candidate encoding feature, the candidate encoding feature whose first evaluation value (i.e., the video quality) is greater than a first threshold is determined as a first target encoding feature; thereafter, from the first target encoding feature, the video encoding feature with a second evaluation value of the smallest (i.e., the smallest bit rate) is selected, and thereafter the quality level corresponding to that video encoding feature is obtained level as the target quality level. Specifically, the above process may be implemented by the candidate encoding feature-evaluation value mapping data saved in the previous step, and the specific process will not be repeated.

**In** the present embodiment, after combining the video multi-method assessment fusion and the bit rate metric, a matching target quality level is obtained, so that the target video encoded based on the target quality level may reduce the bit rate, implement the compression of the video volume, and improve the efficiency of video encoding on the premise of meeting the requirements of the video quality of the predetermined video.

At Step S211, the current frame is encoded at a target quality level with a hardware video editor to generate a target frame for constituting a target video.

At Step S212, if the current frame is not the last frame of the initial video data, the next frame of the current frame, is set as a new current frame, and return to Step S202.

For example, after obtaining the target quality level, the current frame is encoded based on the target quality level to obtain the target frame with a better video quality and a lower bit rate; meanwhile, if the current frame is not the last frame of the initial video data, the process returns to Step S202, and continues to process the next video frame until all video frames are traversed, and generate corresponding target frames, thereby forming the target video. Since variable encoding is performed using different target quality levels for each video frame, the video quality may be improved while the video volume may be reduced, and the video encoding efficiency may be improved.

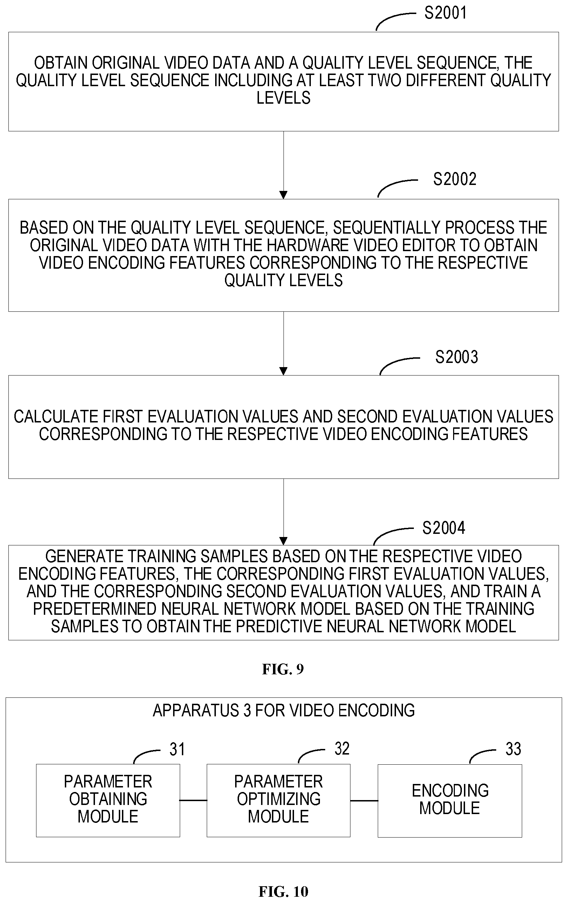

Optionally, based on a specific requirement, before Step S208, a step of training the predictive neural network model is also included, by way of example, as shown in FIG. 9, the step of training the predictive neural network model includes:
At Step S2001, original video data and a quality level sequence are obtained, the quality level sequence including at least two different quality levels;
At Step S2002, based on the quality level sequence, the original video data is sequentially processed with the hardware video editor to obtain video encoding features corresponding to the respective quality levels;
At Step S2003, first evaluation values and second evaluation values corresponding to the respective video encoding features are calculated;
At Step S2004, training samples are generated based on the respective video encoding features, the corresponding first evaluation values, and the corresponding second evaluation values, and a predetermined neural network model is trained based on the training samples to obtain the predictive neural network model.

By way of example, the original video data is a video data sample, and the quality level sequence is a predetermined parameter, and by invoking the hardware video editor with the original video data and the quality level sequence as an input parameter, the corresponding encoding parameter outputted by the hardware video editor may be obtained. Thus the video encoding feature is obtained, and the specific generating process of the video encoding feature may be referred to as described in the above embodiment and will not be further described herein. Afterwards, based on the calculation method of the video multi-method assessment fusion metrics and the encoding parameters output from the hardware video editor, the first evaluation value and the second evaluation value corresponding to each video encoding feature are obtained. The first evaluation value and the second evaluation value are used as sample labels, and the original video data and the level sequence are used as the original samples to generate training samples; and the predetermined neural network model is trained based on the training samples until convergence to obtain the predictive neural network model, and the specific process is not further described.

**In** this embodiment, by using the feature that the hardware video editor may (without actual encoding) easily and quickly output the encoding parameters, combined with the video multi-method assessment fusion metrics to generate the training samples, the efficient and high-quality training of the neural network model is implemented, so that the model may converge quickly, improving the prediction accuracy and efficiency of the model.

Corresponding to the method of video encoding in the foregoing embodiment, FIG. 10 is a structural block diagram of an apparatus for video encoding according to an embodiment of the present disclosure. For ease of illustration, only portions related to embodiments of the present disclosure are shown. Referring to FIG. 10, an apparatus 3 for video encoding includes:
A parameter obtaining module 31 is configured to extract a video encoding feature of initial video data based on a hardware video editor, the video encoding feature representing video content complexity of the initial video data;
A parameter optimizing module 32 is configured, process, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and
An encoding module 33 is configured to encode the initial video data at the target quality level with the hardware video editor to generate a target video.

**In** an embodiment of the present disclosure, the parameter obtaining module 31 is specifically configured to: obtain a candidate quality level of the initial video data; input a video parameter of the initial video data and the candidate quality level into the hardware video editor to obtain an encoding parameter of the initial video data; and generate the corresponding video encoding feature based on the encoding parameter.

**In** an embodiment of the present disclosure, the initial video data includes a plurality of video frames, and when generating the corresponding video encoding feature based on the encoding parameter, the parameter obtaining module 31 is specifically configured to: obtain an encoding parameter corresponding to each of the video frames; obtain an encoding feature mean value and an encoding feature variance value based on the encoding parameter corresponding to each of the video frames, wherein the encoding feature mean value is an average value of the encoding parameter corresponding to each of the video frames, and the encoding feature variance value is a variance value of the encoding parameter corresponding to each of the video frames; and generate the video encoding feature based on the video parameter, the candidate quality level, and the encoding feature mean value and the encoding feature variance value corresponding to each of the video frames.

**In** an embodiment of the present disclosure, when the parameter obtaining module 31 inputs the video parameter of the initial video data and the candidate quality level into the hardware video editor to obtain the encoding parameter of the initial video data, the parameter obtaining module 31 is specifically configured to: perform the following steps cyclically until a predetermined condition is reached: obtaining a current frame of the initial video data; obtaining a video parameter and a quality level of the current frame; inputting the video parameter and the quality level of the current frame into the hardware video editor to obtain an encoding parameter corresponding to the current frame; and setting a next frame of the current frame as a new current frame.

**In** an embodiment of the present disclosure, after obtaining the encoding parameter corresponding to the current frame, the parameter obtaining module 31 is further configured to: generate a frame encoding feature corresponding to the current frame based on the video parameter of the current frame, the quality level and the encoding parameter of the current frame; obtain a frame encoding feature of a preceding frame corresponding to the current frame, the preceding frame being a first predetermined number of video frames adjacent to the current frame, wherein the frame encoding feature of the preceding frame is generated based on a target quality level corresponding to the preceding frame; and

When generating the corresponding video encoding feature based on the encoding parameter, the parameter obtaining module 31 is specifically configured to: generate, based on the frame encoding feature corresponding to the current frame and the frame encoding feature of the preceding frame, the video encoding feature corresponding to the current frame.

In an embodiment of the present disclosure, the encoding parameter includes at least one of the following: frame type, frame size, image distortion, image fineness.

**In** an embodiment of the present disclosure, the video encoding feature of the initial video data includes at least two candidate encoding features, each of the candidate encoding features corresponds to a different quality level, and the parameter optimizing module 32 is specifically configured to: sequentially input each of the candidate encoding features into the predictive neural network model to obtain a corresponding first evaluation value and a corresponding second evaluation value, wherein the first evaluation value represents a video quality assessment value fused based on a video multi-method assessment, and the second evaluation value represents a video bit rate; and generate the target quality level based on the first evaluation value and the second evaluation value corresponding to each of the candidate encoding features.

**In** an embodiment of the present disclosure, when generating the target quality level based on the first evaluation value and the second evaluation value corresponding to each of the candidate encoding features, the parameter optimizing module 32 is specifically configured to: obtain first target encoding features based on the first evaluation value corresponding to each of the candidate encoding features, the first target encoding features being candidate encoding features for which the first evaluation value is greater than a first threshold; determine a second target encoding feature based on the second evaluation values of the first target encoding features, the second target feature being a video encoding feature with the minimum second evaluation value in the first target encoding features; and obtain the target quality level based on a quality level corresponding to the second target feature.

**In** an embodiment of the present disclosure, before processing, based on the pre-trained predictive neural network model, the video encoding feature of the initial video data to obtain the target quality level corresponding to the initial video data, the parameter optimizing module 32 is further configured to: obtain original video data and a quality level sequence, the quality level sequence including at least two different quality levels; based on the quality level sequence, sequentially process the original video data with the hardware video editor to obtain video encoding features corresponding to the respective quality levels; calculate first evaluation values and second evaluation values corresponding to the respective video encoding features; and generate training samples based on the respective video encoding features, the corresponding first evaluation values, and the corresponding second evaluation values, and train a predetermined neural network model based on the training samples to obtain the predictive neural network model.

The parameter obtaining module 31, the parameter optimizing module 32, and the encoding module 33 are connected in sequence. The apparatus 3 for video encoding provided in this embodiment may perform the technical solutions of the foregoing method embodiments, and implementation principles and technical effects thereof are similar, and details are not described herein again in this embodiment.

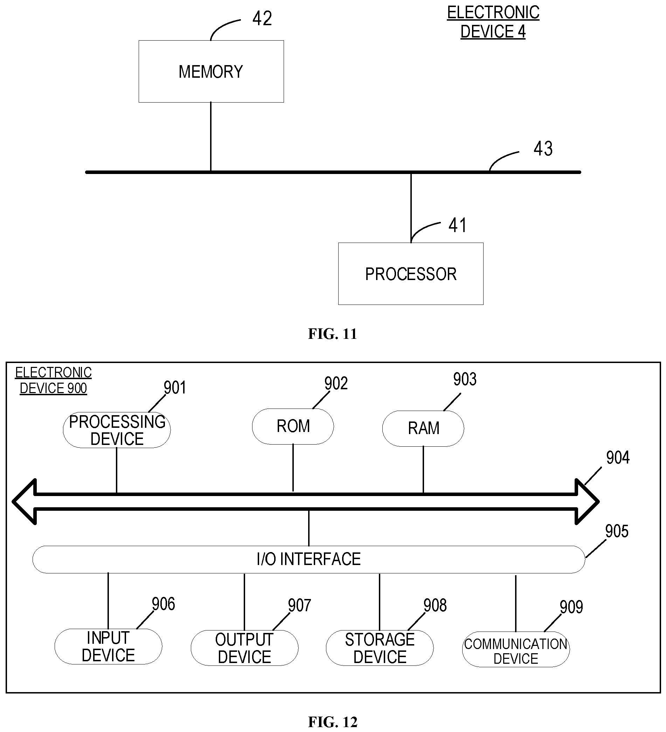

FIG. 11 is a schematic structural diagram of an electronic device according to an embodiment of the present disclosure. As shown in FIG. 11, an electronic device 4 includes:
a processor 41, and a memory 42 communicatively connected to the processor 41;
the memory 42 storing computer executable instructions;
the processor 41 executes the computer executable instruction stored in the memory 42 to implement the method of video encoding in the embodiments shown in FIG. 2 to FIG. 9.

Optionally, the processor 41 and the memory 42 are connected by a bus 43.

Related descriptions may be understood with reference to related descriptions and effects corresponding to the steps in the embodiments corresponding to FIG. 2 to FIG. 9, and details are not described herein again.

FIG. 12 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 12 is merely an example and would not impose any limitation on the functions and scope of use of the embodiments of the present disclosure.

As shown in FIG. 12, the electronic device 900 may include a processing device (for example, a central processing unit, a graphics processor, etc.) 901, which may perform various appropriate actions and processing according to a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. An input/output (I/O) interface 905 is also connected to the bus 904.

Generally, the following devices may be connected to the I/O interface 905: an input device 906 including, for example, a touch screen, a touch pad, a keyboard, a mouse, a camera, a microphone, an accelerometer, a gyroscope, etc.; an output device 907 including, for example, a liquid crystal display (LCD), a speaker, a vibrator, etc.; a storage device 908 including, for example, a magnetic tape, a hard disk, etc.; and a communication device 909. The communication device 909 may allow the electronic device 900 to communicate wirelessly or wired with other devices to exchange data. While FIG. 12 shows an electronic device 900 having various devices, it would be appreciated that it is not required to implement or have all illustrated devices. More or fewer devices may alternatively be implemented or provided.

**In** particular, according to an embodiment of the present disclosure, the process described above with reference to the flowchart may be implemented as a computer software program. For example, the embodiments of the present disclosure include a computer program product including a computer program embodied on a computer readable medium, the computer program including program code for performing the method shown in the flowchart. In such embodiments, the computer program may be downloaded and installed from the network through the communication device 909, or installed from the storage device 908, or from the ROM 902. When the computer program is executed by the processing apparatus 901, the foregoing functions defined in the method of the embodiments of the present disclosure are performed.

**It** would be appreciated that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, apparatus, or appliance, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages or combinations thereof, including object-oriented programming languages - such as Java, Smalltalk, C++ - and conventional procedural programming languages - such as the "C" language or the like. "C" or similar programming languages. The program code may be executed entirely on the computer of the user, partially on the computer of the user, as a stand-alone software package, partially on the computer of the user and partially on a remote computer, or entirely on a remote computer or server. In situations involving a remote computer, the remote computer may be connected to the user computer via any kind of network - including a Local Area Network (LAN) or a Wide Area Network (WAN) - or may be connected to an external computer. (e.g., by utilizing an Internet Service Provider to connect via the Internet).

The flowcharts and block diagrams in the accompanying drawings illustrate the architecture, functions, and operations that may be implemented in the system, method, and computer program product in accordance with various embodiments of the present disclosure. At this point, each block in the flowcharts or block diagrams may represent a module, program segment, or portion of code that contains one or more executable instructions for implementing a specified logical function. It would also be appreciated that in some implementations as replacements, the functions labeled in the blocks may also occur in a different order than those labeled in the accompanying drawings. For example, two consecutively represented boxes may actually be executed substantially in parallel, and they may sometimes be executed in reverse order, depending on the function involved. It is also noted that each of the blocks in the block diagrams and/or flowcharts, and combinations of the blocks in the block diagrams and/or flowcharts, may be implemented with a specialized hardware-based system that performs the specified function or operation, or may be implemented with a combination of specialized hardware and computer instructions.

The units involved in the embodiments of the present disclosure may be implemented in software or may be implemented in hardware. Wherein the name of the unit does not in some cases constitute a limitation of the unit itself, for example, the first obtaining unit may also be described as 'a unit for obtaining at least two Internet Protocol addresses'.

The functions described above may be performed, at least in part, by one or more hardware logic components. For example, without limitation, example types of hardware logic components that may be used include: field-programmable gate arrays (FPGAs), application-specific integrated circuits (ASICs), application-specific standard products (ASSPs), systems-on-chip (SOCs), complex programmable logic devices (CPLDs), and the like.

**In** the context of the present disclosure, a machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include electrical connections based on one or more wires, portable computer disks, hard disks, random access memory (RAM), read-only memory (ROM), erasable programmable read-only memory (EPROM or flash memory), optical fibers, convenient compact disk read-only memory (CD-ROM), optical storage devices, magnetic storage devices, or any suitable combination of the foregoing. any suitable combination of the above.

According to a first aspect, a method of video encoding is provided according to one or more embodiments of the present disclosure, including:
extracting a video encoding feature of initial video data based on a hardware video editor, the video encoding feature representing video content complexity of the initial video data; processing, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and encoding the initial video data at the target quality level with the hardware video editor to generate a target video.

According to one or more embodiments of the present disclosure, extracting the video encoding feature of the initial video data based on the hardware video editor includes: obtaining a candidate quality level of the initial video data; inputting a video parameter of the initial video data and the candidate quality level into the hardware video editor to obtain an encoding parameter of the initial video data; and generating the corresponding video encoding feature based on the encoding parameter.

According to one or more embodiments of the present disclosure, the initial video data includes a plurality of video frames, and generating the corresponding video encoding feature based on the encoding parameter includes: obtaining an encoding parameter corresponding to each of the video frames; obtaining an encoding feature mean value and an encoding feature variance value based on the encoding parameter corresponding to each of the video frames, wherein the encoding feature mean value is an average value of the encoding parameter corresponding to each of the video frames, and the encoding feature variance value is a variance value of the encoding parameter corresponding to each of the video frames; and generating the video encoding feature based on the video parameter, the candidate quality level, and the encoding feature mean value and the encoding feature variance value corresponding to each of the video frames.

According to one or more embodiments of the present disclosure, inputting the video parameter of the initial video data and the candidate quality level into the hardware video editor to obtain the encoding parameter of the initial video data includes: performing the following steps cyclically until a predetermined condition is reached: obtaining a current frame of the initial video data; obtaining a video parameter and a quality level of the current frame; inputting the video parameter and the quality level of the current frame into the hardware video editor to obtain an encoding parameter corresponding to the current frame; and setting a next frame of the current frame as a new current frame.

According to one or more embodiments of the present disclosure, after obtaining the encoding parameter corresponding to the current frame, the method further includes: generating a frame encoding feature corresponding to the current frame based on the video parameter of the current frame, the quality level and the encoding parameter of the current frame; obtaining a frame encoding feature of a preceding frame corresponding to the current frame, the preceding frame being a first predetermined number of video frames adjacent to the current frame, wherein the frame encoding feature of the preceding frame is generated based on a target quality level corresponding to the preceding frame; and generating the corresponding video encoding feature based on the encoding parameter includes: generating, based on the frame encoding feature corresponding to the current frame and the frame encoding feature of the preceding frame, the video encoding feature corresponding to the current frame.

According to one or more embodiments of the present disclosure, the encoding parameter includes at least one of the following: frame type, frame size, image distortion, image fineness.

According to one or more embodiments of the present disclosure, the video encoding feature of the initial video data includes at least two candidate encoding features, each of the candidate encoding features corresponds to a different quality level, and processing, based on the pre-trained predictive neural network model, the video encoding feature of the initial video data to obtain the target quality level corresponding to the initial video data includes: sequentially inputting each of the candidate encoding features into the predictive neural network model to obtain a corresponding first evaluation value and a corresponding second evaluation value, wherein the first evaluation value represents a video quality assessment value fused based on a video multi-method assessment, and the second evaluation value represents a video bit rate; and generating the target quality level based on the first evaluation value and the second evaluation value corresponding to each of the candidate encoding features.

According to one or more embodiments of the present disclosure, generating the target quality level based on the first evaluation value and the second evaluation value corresponding to each of the candidate encoding features includes: obtaining first target encoding features based on the first evaluation value corresponding to each of the candidate encoding features, the first target encoding features being candidate encoding features for which the first evaluation value is greater than a first threshold; determining a second target encoding feature based on the second evaluation values of the first target encoding features, the second target feature being a video encoding feature with the minimum second evaluation value in the first target encoding features; and obtaining the target quality level based on a quality level corresponding to the second target feature.

According to one or more embodiments of the present disclosure, before processing, based on the pre-trained predictive neural network model, the video encoding feature of the initial video data to obtain the target quality level corresponding to the initial video data, the method further includes: obtaining original video data and a quality level sequence, the quality level sequence including at least two different quality levels; based on the quality level sequence, sequentially processing the original video data with the hardware video editor to obtain video encoding features corresponding to the respective quality levels; calculating first evaluation values and second evaluation values corresponding to the respective video encoding features; and generating training samples based on the respective video encoding features, the corresponding first evaluation values, and the corresponding second evaluation values, and training a predetermined neural network model based on the training samples to obtain the predictive neural network model.

According to a second aspect, an apparatus for video encoding is provided according to one or more embodiments of the present disclosure, including:
a parameter obtaining module configured to extract a video encoding feature of initial video data based on a hardware video editor, the video encoding feature representing video content complexity of the initial video data;
a parameter optimizing module configured to, process, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and
an encoding module configured to encode the initial video data at the target quality level with the hardware video editor to generate a target video.

According to one or more embodiments of the present disclosure, the parameter obtaining module is specifically configured to: obtain a candidate quality level of the initial video data; input g a video parameter of the initial video data and the candidate quality level into the hardware video editor to obtain an encoding parameter of the initial video data; and generate the corresponding video encoding feature based on the encoding parameter.

According to one or more embodiments of the present disclosure, the initial video data includes a plurality of video frames, and when generating the corresponding video encoding feature based on the encoding parameter, the parameter obtaining module is specifically configured to: obtain an encoding parameter corresponding to each of the video frames; obtain an encoding feature mean value and an encoding feature variance value based on the encoding parameter corresponding to each of the video frames, wherein the encoding feature mean value is an average value of the encoding parameter corresponding to each of the video frames, and the encoding feature variance value is a variance value of the encoding parameter corresponding to each of the video frames; and generate the video encoding feature based on the video parameter, the candidate quality level, and the encoding feature mean value and the encoding feature variance value corresponding to each of the video frames.

According to one or more embodiments of the present disclosure, when inputting the video parameter of the initial video data and the candidate quality level into the hardware video editor to obtain the encoding parameter of the initial video data, the parameter obtaining module is specifically configured to: perform the following steps cyclically until a predetermined condition is reached: obtaining a current frame of the initial video data; obtaining a video parameter and a quality level of the current frame; inputting the video parameter and the quality level of the current frame into the hardware video editor to obtain an encoding parameter corresponding to the current frame; and setting a next frame of the current frame as a new current frame.

According to one or more embodiments of the present disclosure, after obtaining the encoding parameter corresponding to the current frame, the parameter obtaining module is further configured to: generate a frame encoding feature corresponding to the current frame based on the video parameter of the current frame, the quality level and the encoding parameter of the current frame; obtain a frame encoding feature of a preceding frame corresponding to the current frame, the preceding frame being a first predetermined number of video frames adjacent to the current frame, wherein the frame encoding feature of the preceding frame is generated based on a target quality level corresponding to the preceding frame; and when generating the corresponding video encoding feature based on the encoding parameter, the parameter obtaining module is specifically configured to: generate, based on the frame encoding feature corresponding to the current frame and the frame encoding feature of the preceding frame, the video encoding feature corresponding to the current frame.

According to one or more embodiments of the present disclosure, the encoding parameter includes at least one of the following: frame type, frame size, image distortion, image fineness.

According to one or more embodiments of the present disclosure, the video encoding feature of the initial video data includes at least two candidate encoding features, each of the candidate encoding features corresponds to a different quality level, and the parameter optimizing module is specifically configured to: sequentially input each of the candidate encoding features into the predictive neural network model to obtain a corresponding first evaluation value and a corresponding second evaluation value, wherein the first evaluation value represents a video quality assessment value fused based on a video multi-method assessment, and the second evaluation value represents a video bit rate; and generate the target quality level based on the first evaluation value and the second evaluation value corresponding to each of the candidate encoding features.

According to one or more embodiments of the present disclosure, when generating the target quality level based on the first evaluation value and the second evaluation value corresponding to each of the candidate encoding features, the parameter optimizing module is specifically configured to: obtain first target encoding features based on the first evaluation value corresponding to each of the candidate encoding features, the first target encoding features being candidate encoding features for which the first evaluation value is greater than a first threshold; determine a second target encoding feature based on the second evaluation values of the first target encoding features, the second target feature being a video encoding feature with the minimum second evaluation value in the first target encoding features; and obtain the target quality level based on a quality level corresponding to the second target feature.

According to one or more embodiments of the present disclosure, before processing, based on the pre-trained predictive neural network model, the video encoding feature of the initial video data to obtain the target quality level corresponding to the initial video data, the parameter optimizing module is further configured to: obtain original video data and a quality level sequence, the quality level sequence including at least two different quality levels; based on the quality level sequence, sequentially process the original video data with the hardware video editor to obtain video encoding features corresponding to the respective quality levels; calculate first evaluation values and second evaluation values corresponding to the respective video encoding features; and generate training samples based on the respective video encoding features, the corresponding first evaluation values, and the corresponding second evaluation values, and train a predetermined neural network model based on the training samples to obtain the predictive neural network model.

According to a third aspect, an electronic device is provided according to one or more embodiments of the present disclosure, including: a processor, and a memory communicatively connected to the processor;
the memory storing computer executable instructions; and
the processor executing the computer executable instructions stored in the memory to implement the method of video encoding of the first aspect and various possible designs of the first aspect.

According to a fourth aspect, a computer-readable storage medium having computer-executable instructions stored thereon is provided according to one or more embodiments of the present disclosure, the computer-executable instructions, when executed by a processor, implementing the method of video encoding of the first aspect and the possible designs of the first aspect.

According to a fifth aspect, an embodiment of the present disclosure provides a computer program product including a computer program, the computer program, when executed by a processor, implementing the method of video encoding of the first aspect and various possible designs of the first aspect.

The above description is merely an illustration of the preferred embodiments of the present disclosure and the principles of the application. It would be appreciated by those skilled in the art that the disclosure in the present disclosure is not limited to the technical solutions of the specific combination of the above technical features and would also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this would not be understood to require that these operations be performed in the particular order shown or in sequential order. In certain circumstances, multitasking and parallel processing may be advantageous. Likewise, while several specific implementation details are included in the discussion above, these would not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method of video encoding, comprising:
extracting a video encoding feature of initial video data based on a hardware video editor, the video encoding feature representing video content complexity of the initial video data;
processing, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and
encoding the initial video data at the target quality level with the hardware video editor to generate a target video.

2. The method of claim 1, wherein extracting the video encoding feature of the initial video data based on the hardware video editor comprises:
obtaining a candidate quality level of the initial video data;
inputting a video parameter of the initial video data and the candidate quality level into the hardware video editor to obtain an encoding parameter of the initial video data; and
generating the corresponding video encoding feature based on the encoding parameter.

3. The method of claim 2, wherein the initial video data comprises a plurality of video frames, and generating the corresponding video encoding feature based on the encoding parameter comprises:
obtaining an encoding parameter corresponding to each of the video frames;
obtaining an encoding feature mean value and an encoding feature variance value based on the encoding parameter corresponding to each of the video frames, wherein the encoding feature mean value is an average value of the encoding parameter corresponding to each of the video frames, and the encoding feature variance value is a variance value of the encoding parameter corresponding to each of the video frames; and
generating the video encoding feature based on the video parameter, the candidate quality level, and the encoding feature mean value and the encoding feature variance value corresponding to each of the video frames.

4. The method of claim 2, wherein inputting the video parameter of the initial video data and the candidate quality level into the hardware video editor to obtain the encoding parameter of the initial video data comprises:
performing the following steps cyclically until a predetermined condition is reached:
obtaining a current frame of the initial video data;
obtaining a video parameter and a quality level of the current frame;
inputting the video parameter and the quality level of the current frame into the hardware video editor to obtain an encoding parameter corresponding to the current frame; and
setting a next frame of the current frame as a new current frame.

5. The method of claim 4, wherein after obtaining the encoding parameter corresponding to the current frame, the method further comprises:
generating a frame encoding feature corresponding to the current frame based on the video parameter of the current frame, the quality level and the encoding parameter of the current frame;
obtaining a frame encoding feature of a preceding frame corresponding to the current frame, the preceding frame being a first predetermined number of video frames adjacent to the current frame, wherein the frame encoding feature of the preceding frame is generated based on a target quality level corresponding to the preceding frame; and
generating the corresponding video encoding feature based on the encoding parameter comprises:
generating, based on the frame encoding feature corresponding to the current frame and the frame encoding feature of the preceding frame, the video encoding feature corresponding to the current frame.

6. The method of claim 2, wherein the encoding parameter comprises at least one of the following:
frame type, frame size, image distortion, image fineness.

7. The method of claim 1, wherein the video encoding feature of the initial video data comprises at least two candidate encoding features, each of the candidate encoding features corresponds to a different quality level, and processing, based on the pre-trained predictive neural network model, the video encoding feature of the initial video data to obtain the target quality level corresponding to the initial video data comprises:
sequentially inputting each of the candidate encoding features into the predictive neural network model to obtain a corresponding first evaluation value and a corresponding second evaluation value, wherein the first evaluation value represents a video quality assessment value fused based on a video multi-method assessment, and the second evaluation value represents a video bit rate; and
generating the target quality level based on the first evaluation value and the second evaluation value corresponding to each of the candidate encoding features.

8. The method of claim 7, wherein generating the target quality level based on the first evaluation value and the second evaluation value corresponding to each of the candidate encoding features comprises:
obtaining first target encoding features based on the first evaluation value corresponding to each of the candidate encoding features, the first target encoding features being candidate encoding features for which the first evaluation value is greater than a first threshold;
determining a second target encoding feature based on the second evaluation values of the first target encoding features, the second target feature being a video encoding feature with the minimum second evaluation value in the first target encoding features; and
obtaining the target quality level based on a quality level corresponding to the second target feature.

9. The method of claim 7, wherein before processing, based on the pre-trained predictive neural network model, the video encoding feature of the initial video data to obtain the target quality level corresponding to the initial video data, the method further comprises:
obtaining original video data and a quality level sequence, the quality level sequence comprising at least two different quality levels;
based on the quality level sequence, sequentially processing the original video data with the hardware video editor to obtain video encoding features corresponding to the respective quality levels;
calculating first evaluation values and second evaluation values corresponding to the respective video encoding features; and
generating training samples based on the respective video encoding features, the corresponding first evaluation values, and the corresponding second evaluation values, and training a predetermined neural network model based on the training samples to obtain the predictive neural network model.

10. An apparatus for video encoding, comprising:
a parameter obtaining module configured to extract a video encoding feature of initial video data based on a hardware video editor, the video encoding feature representing video content complexity of the initial video data;
a parameter optimizing module configured to, process, based on a pre-trained predictive neural network model, the video encoding feature of the initial video data to obtain a target quality level corresponding to the initial video data, wherein the target quality level represents an image quality level when the initial video is encoded in a constant quality variable bit rate mode; and
an encoding module configured to encode the initial video data at the target quality level with the hardware video editor to generate a target video.

11. An electronic device, comprising: a processor, and a memory communicatively connected to the processor;
the memory storing computer executable instructions; and
the processor executing the computer executable instructions stored in the memory to implement the method of video encoding of any of claims 1 to 9.

12. A computer-readable storage medium having computer-executable instructions stored thereon, the computer-executable instructions, when executed by a processor, implementing the method of video encoding of any of claims 1 to 9.

13. A computer program product comprising a computer program, the computer program, when executed by a processor, implementing the method of video encoding of any of claims 1 to 9.
